# EUROPÄISCHE PATENTSCHRIFT

(11) **EP 2 708 731 B1**
(45) Veröffentlichungstag und Bekanntmachung des Hinweises auf die Patenterteilung: **20.07.2016**
(21) Anmeldenummer: 13004335.9
(22) Anmeldetag: 04.09.2013
(51) Int. Cl.: F03D 1/00

(54) **Verfahren und Vorrichtung zum Transport eines Rotorblatts einer Windenergieanlage**
Method and device for transporting a rotor blade of a wind energy plant
Procédé et dispositif de transport d'une pale de rotor d'une installation éolienne

(30) Priorität: 18.09.2012 DE 102012018379
(43) Veröffentlichungstag der Anmeldung: 19.03.2014
(73) Patentinhaber: Senvion GmbH, 22297 Hamburg (DE)
(72) Erfinder: Bartsch, Tobias, 39104 Magdeburg (DE)
(74) Vertreter: Glawe, Delfs, Moll

(56) Entgegenhaltungen:
- US-A1- 2004 217 037
- US-A1- 2011 031 292
- US-A1- 2011 131 785
- US-A1- 2012 192 420

## Beschreibung

Die vorliegende Erfindung betrifft ein Verfahren sowie eine Vorrichtung zum Transport eines Rotorblatts einer Windenergieanlage, z.B. an den Aufstellungsort der Windenergieanlage. Der Transport eines Rotorblatts erfolgt oftmals zunächst mit Hilfe eines Landfahrzeuges, z.B. eines für Großtransporte ausgebildeten Speziallastkraftfahrzeuges, zu einem ersten Verladeort, an dem das Rotorblatt auf ein Wasserfahrzeug, z.B. ein Güterschiff, verladen wird. Anschließend wird das Rotorblatt mit dem Wasserfahrzeug auf dem Seeweg zu einem zweiten Verladeort transportiert, der entweder direkt am Aufstellungsort der Windenergieanlage liegt oder an dem das Rotorblatt wieder auf ein Landfahrzeug verladen wird, um von dort auf dem Landweg zum Aufstellungsort der Windenergieanlage transportiert zu werden. Die Erfindung bezieht sich aber auch auf ein Verfahren, bei dem zunächst der Rotorblatttransport auf dem Seeweg erfolgt, und dann eine Umladung auf ein Landfahrzeug erfolgt.

Bei dem Transport des Rotorblatts mit dem Landfahrzeug muss das Rotorblatt in einer Lage transportiert werden, die so ausgerichtet ist, dass die Gesamthöhe des Transportzuges eine Maximalhöhe nicht überschreitet. Weiterhin darf der Transportzug auch nicht zu breit sein. Beides ist erforderlich, damit der Transportzug auch Unterführungen, Tunnel und Brücken etc. durchfahren kann. Aus dieser Bedingung ergibt sich eine für den Straßentransport günstige Lage des Rotorblattes. Demgegenüber muss das Rotorblatt für den Transport auf einem Wasserfahrzeug in eine andere Lage ausgerichtet werden, nämlich in eine für den Seetransport günstige Lage. Diese günstige Lage unterliegt anderen Randbedingungen als die für den Landtransport und resultiert aus dem Umstand, dass auf dem Wasserfahrzeug mehrere Rotorblätter gleichzeitig transportiert werden, und die Rotorblätter dazu möglichst platzsparend ausgerichtet sein sollten. Diese günstige platzsparende Ausrichtung unterscheidet sich von der günstigen Ausrichtung des Landtransportes. Entsprechend muss die Ausrichtung des Rotorblattes am Verladeort von der für den Landtransport günstigen in die für den Seetransport günstige Ausrichtung gedreht werden. Gleiches gilt, wenn die erste Transportstrecke auf dem Seeweg zurückgelegt und nachfolgend das Rotorblatt auf ein Landfahrzeug umgeladen wird. In diesem Fall muss das Rotorblatt wieder in die für den Landtransport günstige Ausrichtung gedreht werden.

Der Transport des Rotorblatts erfolgt im allgemeinen in einem starren Gestell, in dem das Rotorblatt in der für den anstehenden Transportabschnitt günstigen Ausrichtung angeordnet wird, wobei das Gestell auch so ausgebildet sein kann, dass mehrere Rotorblätter darin anordenbar sind. In der Regel werden für den Landtransport und für den Seetransport unterschiedliche Gestelle verwendet.

Der Nachteil der Transportverfahren unter Verwendung von verschiedenen Gestellen für den Land- und den Seetransport besteht darin, dass das Rotorblatt mit Hilfe von Kränen aus dem Gestell für den Landtransport entnommen werden muss, um in die für den Seetransport günstige Ausrichtung gedreht werden zu können, und um das Rotorblatt in dem anderen Gestell für den Seetransport anzuordnen. Dieser Dreh- und Umladevorgang ist, insbesondere da mehrere Rotorblätter umgelagert werden müssen, sehr zeitintensiv. Zudem erfolgt die Neuausrichtung/Umlagerung der Rotorblätter in der Regel auf dem Hafengelände. Dies bedeutet, dass die Neuausrichtung/Umlagerung sehr kostenintensiv ist, da Hafenarbeiten teuer sind. Ein weiterer Nachteil dieser Neuausrichtung/Umlagerung ist, dass dabei die Gefahr besteht, dass die Rotorblätter beschädigt werden, z. B. durch Anschlagmittel oder durch Kollision mit den Gestellen.

Aus der WO 03/057528 A1 ist ein Transportfahrzeug für ein Rotorblatt einer Windenergieanlage bekannt, mit einer Zugmaschine und einem Nachläufer, die während des Rotorblatttransports durch das Rotorblatt miteinander verbunden sind und die jeweils ein Aufnahme-/Haltegestell aufweisen, die so ausgebildet sind, dass das Rotorblatt darin gedreht werden kann. Über die Verdrehmöglichkeit soll die Transporthöhe des Rotorblatts, insbesondere beim Unterfahren einer Unterführung, eines Tunnels oder einer Brücke, verändert werden. Entsprechend ist aus der WO 03/057528 A1 bekannt, dass das Rotorblatt verdrehbar in zwei Gestellen gelagert werden kann. Der Nachteil der aus der WO 03/057528 A1 bekannten Gestelle ist aber, dass sie nicht für die Lagerung der Rotorblätter für den Seetransport geeignet sind. Entsprechend müssen Rotorblätter, die über das bekannte Transportfahrzeug zu einem Verladeort transportiert werden, ebenso wie beim bereits diskutierten Stand der Technik über zwei Kräne von dem Transportfahrzeug in andere Gestelle verladen werden, wodurch die bereits diskutierten Probleme der Beschädigungsgefahr der Rotorblätter bei der Umlagerung sowie auch die hohen Kosten bestehen.

Aus der WO 2008/0044195 A2 ist ein Verfahren und eine Vorrichtung bekannt, die sich mit dem eingangs beschriebenen Problem der Neuausrichtung/Umlagerung von Rotorblättern beim Übergang vom Land- zum Seetransport beschäftigen. Es wird dazu eine zweigeteilte Transportvorrichtung mit einem Blattwurzelgestell und einem Blattspitzengestell vorgeschlagen, die das Rotorblatt zum einen in einer für den Landtransport günstigen Lage halten und zum anderen in einer für den Seetransport günstigen Lage. Die für den Landtransport günstige Lage soll dabei diejenige sein, bei der sich die maximale Rotorblattbreite in horizontaler Richtung erstreckt. Demgegenüber soll die für den Schiffstransport günstige Lage um 90° gedreht sein, so dass sich die maximale Rotorblattbreite in vertikaler Richtung erstreckt. Die Neuausrichtung/Umlagerung, also die Drehung um 90°, soll mit Hilfe eines Kranes erfolgen, der an einem Hebegestell angreift, das im Schwerpunkt des Rotorblattes an diesem befestigt ist. Es wird als nachteilig angesehen, dass drei Gestelle vorgesehen sind für die Handhabung des Rotorblattes, und dass die Neuausrichtung/Umlagerung des Rotorblattes anspruchsvoll in der Handhabung ist, da das Spitzen- und das Wurzelgestell um 90° gedreht werden müssen. Zudem setzt die Neuausrichtung/Handhabung die Verwendung eines Kranes voraus. Schließlich sind die angegebenen Ausrichtungen für den Land- und Seetransport nicht uneingeschränkt als günstig anzusehen.

Das Dokument US 2011/031292 offenbart ein Verfahren und eine Vorrictung gemäß dem Oberbegriff der Ansprüche 1 bzw 10.

Die Aufgabe der vorliegenden Erfindung ist es daher, einen Transport von Rotorblättern auf dem Land- und dem Seeweg zu ermöglichen, der einfach in der Handhabung und kostengünstig ist, und der zudem die Rotorblätter einem möglichst geringen Beschädigungsrisiko aussetzt.

Gelöst wird die Aufgabe durch ein Verfahren gemäß Anspruch 1 und durch eine Vorrichtung gemäß Anspruch 10. Weitere vorteilhafte Ausgestaltungen des Verfahrens und der Vorrichtung sind in den Unteransprüchen angegeben.

Das erfindungsgemäße Verfahren zeichnet sich dadurch aus, dass für den Land-und den Seetransport die gleiche Transportvorrichtung verwendet wird. Das Rotorblatt bleibt während des gesamten Transportes und während des Umladens auf das Wasserfahrzeug oder von dem Wasserfahrzeug in dieser Transportvorrichtung gehalten. Zur Neuausrichtung/Umlagerung des Rotorblattes muss die Transportvorrichtung nicht gedreht werden, sondern das Rotorblatt ist drehbar darin angeordnet und kann deshalb innerhalb der Transportvorrichtung gedreht werden. Die Transportvorrichtung ist wenigstens zweiteilig ausgebildet und besteht wenigstens aus einem blattwurzelseitig angeordneten Wurzelgestell und einem blattspitzenseitig angeordneten Spitzengestell. Es ist eine Dreheinrichtung vorgesehen, die z.B. am Wurzelgestell angeordnet sein kann, um die erforderliche Drehung des Rotorblattes für die Neuausrichtung/Umlagerung durchzuführen.

Die vorliegende erfindungsgemäße Vorrichtung hat den Vorteil, dass die Rotorblätter zum Verladeort transportiert werden und dort ohne großen Zeitaufwand über Kräne in ein Schiff oder auf ein Landfahrzeug verladen werden können, abhängig davon, in welcher Reihenfolge Land- und Seetransport stattfinden, da durch Verwendung der gleichen Transportvorrichtung kein Umlagern der Rotorblätter von einer ersten in eine zweite Transportvorrichtung erforderlich ist. Gleichzeitig ist dadurch auch die Gefahr eventueller Beschädigungen der Rotorblätter reduziert. Da das Rotorblatt innerhalb der Transportvorrichtung gedreht werden kann ist auch das Rotorblatthandling beim Umladen bzw. bei der Neuausrichtung/Umlagerung deutlich vereinfacht.

Während des Umladens des Rotorblattes könnte z.B. am Rotorblatt selber angegriffen werden oder es könnte eine Hebevorrichtung an das Rotorblatt montiert werden, z.B. im Rotorblattschwerpunkt, um daran anzugreifen. Mit Vorteil wird zum Verladen des Rotorblattes auf das Wasserfahrzeug oder auf das Landfahrzeug aber an der Transportvorrichtung angegriffen, die dazu z.B. über spezielle Anschlagmittel verfügt. Dies vermeidet Belastungen des Rotorblattes, die bei Angriff am Rotorblatt entstünden. Dies reduziert auch den Zeitaufwand, der z.B. für das Montieren einer Hebevorrichtung entstünde.

Während des Seetransports sind regelmäßig kaum Höhen- oder Breitenbeschränkungen gegeben. Daher werden mit Vorteil auf dem Wasserfahrzeug mindestens zwei in Transportvorrichtungen angeordnete Rotorblätter über- und/oder nebeneinander angeordnet und die benachbart zueinander angeordneten Transportvorrichtungen miteinander verbunden. Dazu können die Transportvorrichtungen Verbindungselemente aufweisen, wie sie z.B. bei Schiffscontainern bekannt sind.

Die Dreheinrichtung kann z.B. motorische Antriebe umfassen. Kostengünstiger und robuster ist die Dreheinrichtung aber handbetrieben auszubilden. Da das Rotorblatt blattwurzelseitig aufgrund des Blattwurzelflansches eine höhere Stabilität aufweist, ist die Dreheinrichtung bevorzugt am blattwurzelseitigen Gestell ausgebildet.

Eine einfache Konstruktion der Dreheinrichtung besteht z.B. aus einem Hebelarm, der von einem Hebezeug gedreht wird. Der Hebelarm könnte z.B. von einem Kran bewegt werden. Bevorzugt ist das Hebezeug aber ein Kettenzug, der an dem freien Ende des Hebelarms angreift zum Drehen des Rotorblattes durch Betätigung des Kettenzuges.

In der Regel ist es nicht notwendig, das Rotorblatt um 90° zu drehen, wie im Stand der Technik vorgeschlagen, da eine günstige Lage für den Straßentransport nicht unbedingt erfordert, dass sich die maximale Rotorblattbreite in horizontaler Richtung erstreckt. Die maximale Rotorblattbreite kann sich z.B. zwischen der horizontalen und der vertikalen Ausrichtung erstrecken, z.B. in 45°-Richtung. Das Rotorblatt kann dann um weniger als 45 ° gedreht werden, insbesondere um weniges als 30°, insbesondere um 10°-20°, um von dieser günstigen Lage für den Straßentransport zu einer günstigen Lage für den Seetransport zu gelangen. Anders als im Stand der Technik ausgeführt ist eine günstige Lage für den Seetransport nicht dann gegeben, wenn die maximale Rotorblattbreite in vertikaler Richtung steht.

Mit Vorteil wird das Rotorblatt in der für den Straßentransport und/oder für den Seetransport günstigen Position arretiert, um ein ungewolltes Verdrehen zu vermeiden. Mit Vorteil erfolgt dabei die Arretierung des Rotorblattes durch Arretierung der Dreheinrichtung. Eine zusätzliche Arretiereinrichtung am Blattwurzelgestell ist dadurch entbehrlich.

Das Wurzel- und das Spitzengestell weisen bevorzugt jeweils einen Rahmen auf, der lösbar auf einem Landfahrzeug anordenbar ist und der jeweils Anschlagpunkte für das Anschlagen eines Kranes aufweist. Diese Anschlagpunkte sind weiter bevorzugt als Containerecken ausgebildet, so dass die Rahmen leicht aufeinander und nebeneinander angeordnet und bei Bedarf aneinander befestigt werden können.

Das Spitzengestell greift am Rotorblatt an in einem Bereich zwischen dem Schwerpunkt des Rotorblattes und dem spitzenseitigen Rotorblattende. Es besteht mit Vorteil aus einer Rahmenkonstruktion und darin drehbar angeordneten Aufnahmemitteln für die Rotorblattspitze. Mit Vorteil ist der Rahmen einseitig nach oben offen ausgebildet, um durch diese Öffnung das Rotorblatt in die Aufnahmemittel einlegen zu können.

Diese Aufnahmemittel weisen mit Vorteil eine Auflagerschale zur formschlüssigen Aufnahme der Rotorblattspitze auf, die über einen Breitgurt an dem Rahmen befestigt ist, wobei die Auflagerschale über Rollen beweglich auf dem Breitgurt angeordnet ist. Auf diese Weise kann die Auflagerschale in Position und Lage geändert werden und z.B. einer blattwurzelseitig induzierten Drehbewegung folgen. Die Auflagerschale kann durch geeignete Spannmittel, beispielsweise durch Spanngurte/-seile oder Zurrketten, die von der Auflagerschale zum Rahmen führen, gesichert werden.

Dabei liegt die Auflagerschale dem Rotorblatt bevorzugt über einen so großen Umfangsbereich des Rotorblattes formschlüssig an, dass das Rotorblatt sowohl in der für den Straßentransport als auch in der für den Seetransport günstigen Position gegen Herausrutschen aus der Auflagerschale formschlüssig gehalten ist. Dies wird in einfacher Weise erreicht, wenn die Auflagerschale das Rotorblatt formschlüssig um mehr als 180° umschließt, bevorzugt um mehr als 210°, weiter bevorzugt um mehr als 240°. In beiden bevorzugten Transportlagen ruht dann das Rotorblatt großflächig auf der Auflagerschale und ist sicher gegen ein Herausrutschen in Gravitationsrichtung oder in Drehrichtung gesichert.

Für das Einlegen des Rotorblattes in die Auflagerschale ist es von Vorteil, dass die Auflagerschale aus einer ersten Auflagerplatte und einer schwenkbar daran angelenkten zweiten Auflagerplatte besteht. Durch Schwenken der zweiten Auflagerplatte in eine Offenstellung ist ein leichtes Einlegen des Rotorblattes möglich, und nach dem erfolgten Einlegen kann die zweite Auflagerplatte in die geschlossene Stellung geschwenkt werden, in der sie am Rotorblatt zur Anlage kommt, bevorzugt formschlüssig.

Nachfolgend soll die Erfindung anhand von in den Figuren gezeigten Ausführungsbeispielen weiter erläutert werden. Es zeigen:
- Fig. 1a: ein in einer Transportvorrichtung gehaltenes Rotorblatt in einer für den Landtransport günstigen Lage;
- Fig. 1b: ein in einer Transportvorrichtung gehaltenes Rotorblatt in einer für den Wassertransport günstigen Lage;
- Fig. 1c: mehrere in Transportvorrichtungen gehaltene Rotorblätter in einer für den Seetransport günstigen Lage und Anordnung;
- Fig. 2a, 2b: ein Blattwurzelgestell einer Transportvorrichtung in zwei perspektivischen Ansichten;
- Fig. 3: ein Spitzengestell einer Transportvorrichtung in einer perspektivischen Ansicht;
- Fig. 4a: ein Blattwurzelgestell mit davon in Landtransportlage gehaltenem Rotorblatt in einer Frontalansicht;
- Fig. 4b: ein Spitzengestell mit davon in Landtransportlage gehaltenem Rotorblatt in einer Frontalansicht;
- Fig. 5a: das Blattwurzelgestell aus Fig. 4a nach Drehung in die Wassertransportlage; und
- Fig. 5b: das Spitzengestell aus Fig. 4b nach Drehung in die Wassertransportlage.

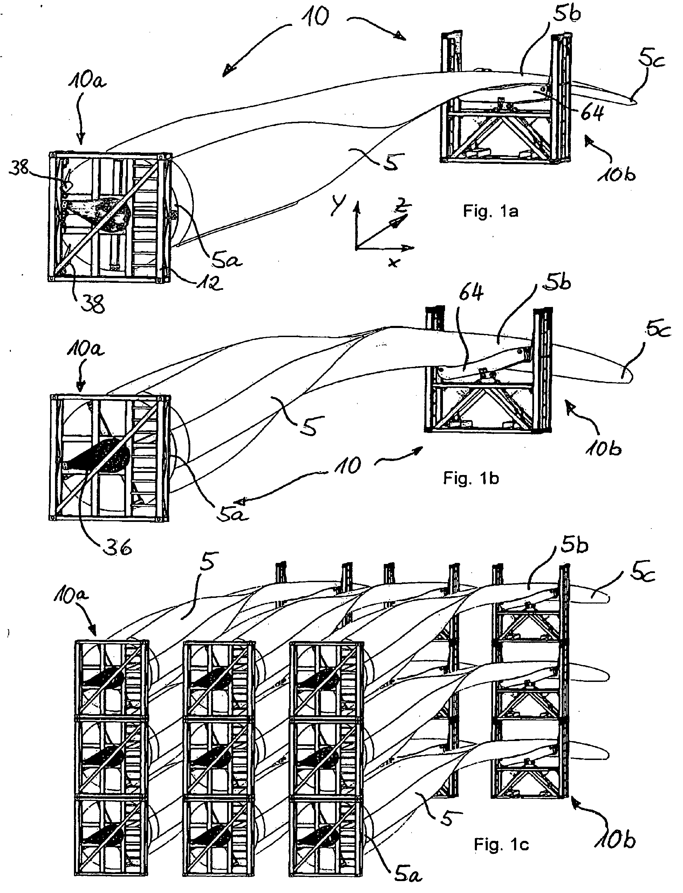

Die Fig. 1a, 1b und 1c zeigen jeweils in einer perspektivischen Ansicht erfindungsgemäße Transportvorrichtungen 10 mit davon gehaltenen Rotorblättern 5. Die Transportvorrichtung 10 besteht dabei jeweils aus einem Gestell, das das Rotorblatt 5 an dessen Blattwurzel 5a hält, und das daher nachfolgend als Blattwurzelgestell 10a bezeichnet wird, und aus einem Gestell, das das Rotorblatt 5 in dessen Blattspitzenbereich 5b hält und daher nachfolgend als Spitzengestell 10b bezeichnet wird. Die Anordnung des Spitzengestells 10b erfolgt in einem Bereich des Rotorblattes 5, der in Längsrichtung (in z-Richtung) des Rotorblattes zwischen dem Rötorblattschwerpunkt und dem Rotorblattspitzenende 5c liegt. Einzelheiten zum Aufbau und zur Funktionsweise der Gestelle 10a und 10b werden später noch erläutert.

Das Rotorblatt 5 der Fig. 1a ist in einer anderen Lage gehalten als die Rotorblätter 5 der Fig. 1b und 1c. Während das Rotorblatt 5 der Fig. 1a so orientiert gehalten ist, dass die Richtung der maximalen Rotorblattbreite im wesentlichen horizontal liegt, ist in den Fig. 1b und 1c diese Richtung der maximalen Rotorblattbreite um etwa 10° bis 20° gegen den Uhrzeigersinn aus der Horizontalen herausgedreht. Die Rotorblattlage der Fig. 1a ist für den Land- bzw. Straßentransport günstig, weil für diesen Transportweg eine bestimmte Maximalhöhe einzuhalten ist, was am leichtesten in der dargestellten Rotorblattlage möglich ist. Die Rotorblattlage der Figur 1b ist hingegen günstiger für den Seetransport, weil hier keine Höhenvorgaben kritisch sind, sondern das Interesse an einer möglichst raumsparenden Anordnung im Vordergrund steht. Die Beibehaltung der in Fig. 1a gezeigten Lage wäre für den Seetransport nicht günstig, weil dann der Abstand zwischen benachbart nebeneinander angeordneten Rotorblättern 5 durch die maximale Rotorblattbreite bestimmt wäre. Durch Drehen des Rotorblattes 5 in eine Stellung wie in Fig. 1b gezeigt können die Rotorblätter 5 enger aneinander gestellt angeordnet werden, ohne dass es zu Berührung zwischen den Rotorblättern 5 kommt. Ein noch stärkeres Drehen ist nicht vorteilhaft, weil dann das Aufeinanderstellen der Transportvorrichtungen 10 behindert wäre, wie in Fig. 1c exemplarisch anhand von drei Reihen mit jeweils drei aufeinander gestapelt angeordneten Transportvorrichtungen 10 mit darin gehaltenen Rotorblättern 5 gezeigt.

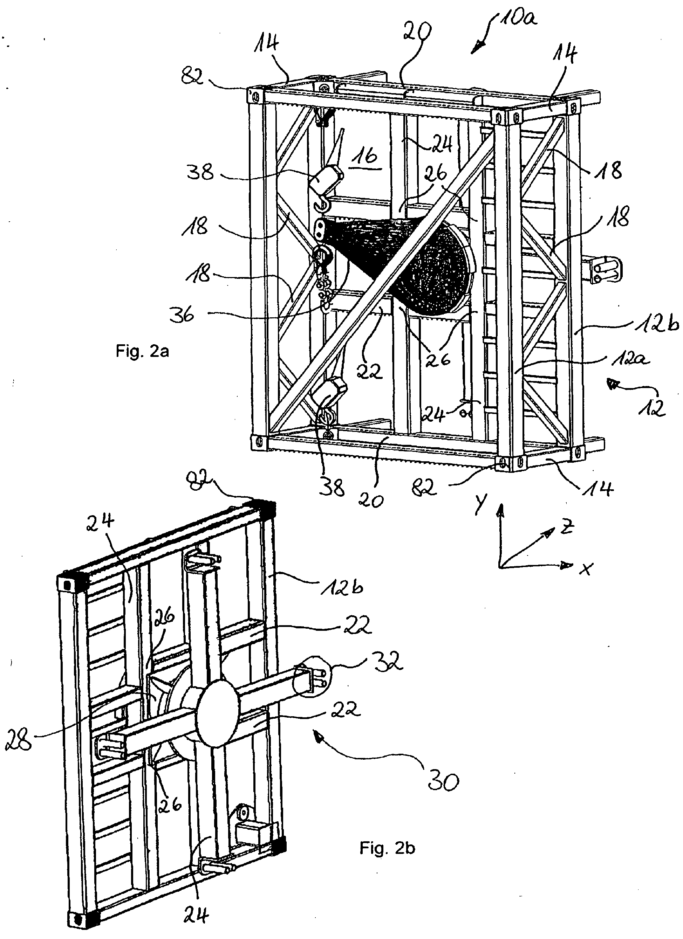

Weitere Einzelheiten zum Aufbau eines typischen Blattwurzelgestells 10a zeigen die Fig. 2a und 2b. Das Gestell 10a besteht aus einem rechteckigen Doppelrahmen 12, der aus Vierkantstahlrohren aufgebaut ist. Ein erster rechteckiger Rahmen 12a ist dabei über Horizontalvierkantstreben 14 mit einem zweiten rechteckigen Rahmen 12b verbunden, so dass der entstehende Doppelrahmen 12 in seinem Inneren ein Kastenvolumen 16 umrahmt. Zur weiteren Verstärkung und Versteifung des Doppelrahmens 12 sind in den seitlichen Seitenflächen weitere Diagonalstreben 18 vorgesehen. Auch die bodenseitig, untere und die dachseitig, obere Seitenfläche kann entsprechend mit Streben 20 ausgesteift werden, wobei die Hauptlast, die vom Doppelrahmen 12 zu bewältigen ist, die Gewichtskraft des Rotorblattes 5 ist, das von dem Doppelrahmen 12 getragen werden soll.

Die vom Betrachter abgewandte Seite des Doppelrahmens 12 weist zwei beabstandet zueinander und im Wesentlichen horizontal verlaufende Horizontalholme 22 auf. Diese Seite weist weiterhin zwei in vertikaler Richtung verlaufende Vertikalholme 24 auf, die ebenfalls in einem Abstand zueinander angeordnet sind. Diese vier Holme 22, 24 auf der vom Betrachter abgewandten Seite kreuzen sich in vier Punkten 26, die die Eckpunkte eines von den Holmen 22, 24 umrahmten zentralen Quadrates bilden. In diesem Quadrat ist eine Trägerplatte 28 angebracht mit einer zentralen Drehdurchführung, durch die eine drehbar gelagerte Drehachse verläuft. Rotorblattseitig bzw. auf der vom Betrachter abgewandten Seite trägt die Drehachse ein vierarmiges Drehkreuz 30, an dem die Blattwurzel 5a des Rotorblattes 5 befestigt werden kann. An den freien Enden der Arme des Drehkreuzes 30 befinden sich dazu Bolzenaufnahmen 32 für die Blattwurzelflanschbolzen 34 des Rotorblattes 5. Diese Bolzen 34 durchsetzen die Bolzenaufnahmen 32, so dass Muttern auf die Bolzenenden geschraubt werden können.

Die dem Betrachter zugewandte Seite der Drehachse trägt einen Hebelarm 36, an dessen freiem Ende ein Hebezeug 38 eingehängt werden kann, um den Hebelarm 36 um die Drehachse herum zu drehen. Als Hebezeug 38 weist das Wurzelgestell 10a einen Kettenzug auf, der zwischen dem freien Ende des Hebelarms 36 und der Rahmenoberseite des Doppelrahmens 12 gespannt werden kann, um durch Betätigen des Kettenzuges 38 den Hebelarm 36 nach oben zu ziehen. Wird der Kettenzug 38 zwischen der Rahmenunterseite des Doppelrahmens 12 und dem freien Ende des Hebelarms 36 gespannt, kann der Hebelarm 36 durch Betätigen des Kettenzuges 38 nach unten gezogen werden. Fig. 2 zeigt zwei Kettenzüge 38, wobei einer davon zwischen der Rahmenoberseite und dem Hebelarm 36 verläuft und der andere zwischen dem Hebelarm 36 und der Rahmenunterseite. Je nachdem, in welche Richtung der Hebelarm 36 bewegt werden soll, wäre der untere oder der obere Kettenzug 38 zu betätigen und ggf. der andere Kettenzug 38 zu entspannen. Der Hebelarm kann z.B. dadurch arretiert werden, dass die beiden Kettenzüge 38 mit gleicher Zugkraft betätigt werden. Für die Arretierung weist der Hebelarm aber an seinem drehachsenseitigen Ende Arretierbohrungen 40 auf, durch die Arretierbolzen eingeschoben und in Eingriff mit der Trägerplatte 28 gebracht werden können, die korrespondierende Arretierbohrungen aufweist.

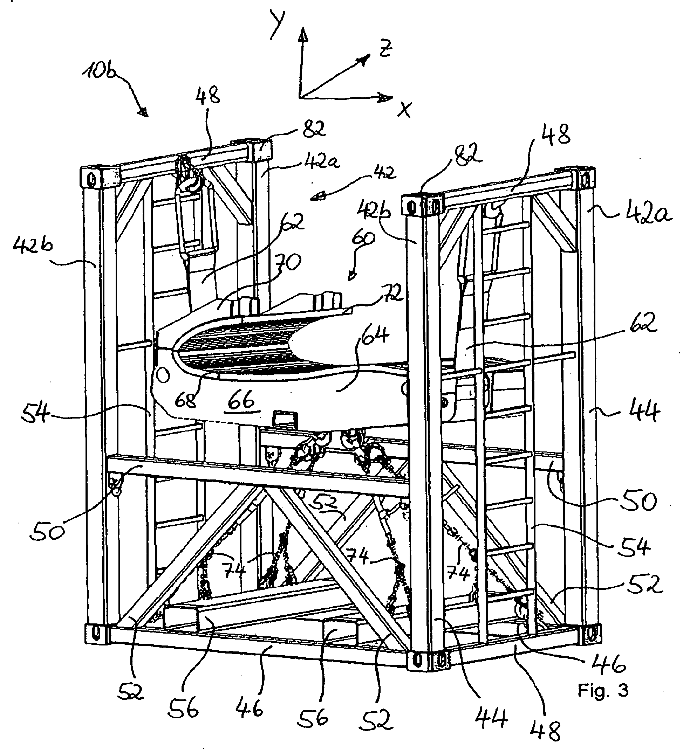

Weitere Einzelheiten zum typischen Aufbau eines Spitzengestells 10b zeigt Fig. 3. Das Spitzengestell 10b besteht aus einem rechteckigen Doppelrahmen 42, der allerdings nach oben offen ist. Der vordere und der hintere Rahmen 42a, 42b des Doppelrahmens bestehen also jeweils nur aus zwei Vertikalvierkantrohren 44 und einem Horizontalvierkantrohr 46, das sich zwischen den unteren Enden der Vertikalvierkantrohre 44 erstreckt. Der vordere und der hintere Rahmen 42a, 42b sind zur Bildung des Doppelrahmens 42 an den Rahmenecken mit Horizontalvierkantstreben 48 verbunden. Die Rahmenstabilität ist weiter erhöht durch Horizontalversteifungsstreben 50, die in der vorderen und in der hinteren Doppelrahmenstirnfläche unterhalb der halben Höhe des Rahmens 42 zwischen den Vertikalrohren 44 verläuft, und die zusätzlich durch Diagonalstreben 52 stabilisiert und ausgesteift ist, die von den Rahmenecken zur Horizontalversteifungsstrebenmitte verlaufen. In den seitlichen Seitenflächen sind Leitern 54 angeordnet, während die bodenseitige Seitenfläche mit zwei Vierkantbodenstreben 56 zur weiteren Verstärkung des Rahmens 42 ausgestattet ist. Die Vierkantbodenstreben 56 können bei geeigneter Ausführung als Gabelstaplertaschen genutzt werden, wodurch ein einfacher Transport des Gestells ermöglicht wird.

Diese Doppelrahmenkonstruktion 42 trägt die Rotorblattaufnahme 60, die gebildet wird von einem Breitgurt 62, dessen Gurtenden am oberen offenen Doppelrahmenende eingehängt sind, und von einem Rotorblattauflager 64, das auf dem Breitgurt 62 entlanggleiten kann. Dazu weist das Rotorblattauflager 64 auf seiner Unterseite nicht dargestellte Rollen auf. Die Rollen können beispielsweise als Rollenpaar ausgeführt sein, durch die der Breitgurt 62 geführt wird und durch dann ein Abrutschen des Rotorblattauflagers 64 vom Breitgurt 62 verhindert wird. Das Rotorblattauflager 64 besteht aus einer Basisplatte 66, deren Auflagefläche 68 der Außenkontur des Rotorblattes 5 in dessen aufzunehmendem Bereich nachgeformt ist, um eine großflächige Auflage zu gewährleisten. An dieser Basisplatte 66 ist ein schwenkbares Auflagerelement 70 schwenkbar angelenkt. Dieses schwenkbare Auflagerelement 70 kann in eine wie in Fig. 3 dargestellte geschlossene Stellung geschwenkt werden und liegt dann großflächig und formschlüssig dem Rotorblatt 5 an. Das Auflagerelement 70 kann in eine Öffnungsstellung geschwenkt werden und ermöglicht dann den freien Zugang zur Auflagefläche 68 der Basisplatte 66. Rotorblattseitig ist das Rotorblattauflager 64 mit einer Matte 72 aus einem elastischen Material versehen, während die Basisplatte 66 und das schwenkbare Auflagerelement 70 aus einem formstabilen Material geformt sind. Die Basisplatte 66 und das Auflagerelement 70 können z.B. aus Stahlblech bestehen, und die Matte 72 z.B. aus Zellkautschuk oder einem anderen Elastomer.

Zur Fixierung des Rotorblattauflagers 64 sind zwischen der Rotorblattauflagerunterseite und dem Doppelrahmen 42 vier Spanngurte 74 verspannt, die das Rotorblattauflager 64 gegen ein Gleiten auf dem Breitgurt 62 sichern. Soll eine Drehung des Rotorblattes 5 erfolgen, werden die Spanngurte 74 gelöst und das Rotorblattauflager 64 kann sich auf dem Breitgurt 62 verschieben. Nach erfolgter Drehung des Rotorblattes 5 wird die Position des Rotorblattauflagers 64 wieder durch Spanngurte 74 gesichert.

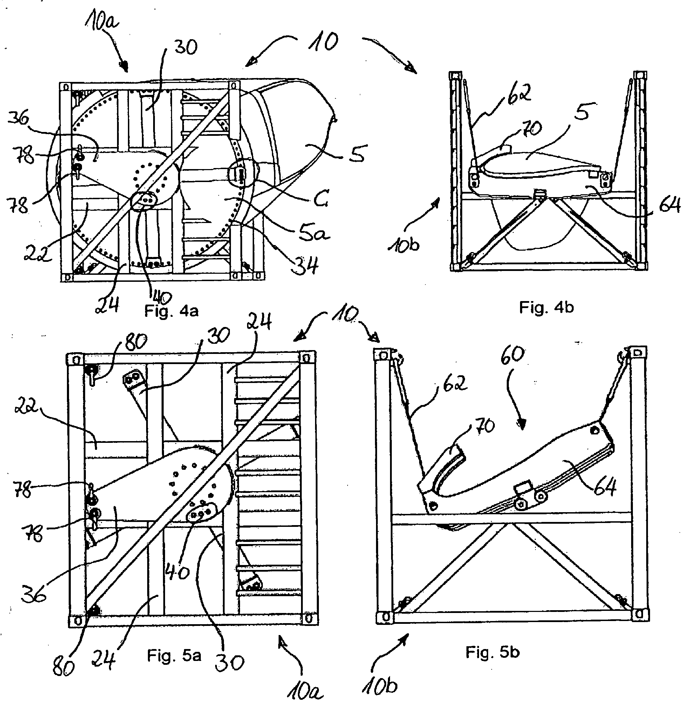

Die Fig. 4a und 4b zeigen in einer Frontalansicht das Wurzelgestell 10a (Fig. 4a) und das Spitzengestell 10b (Fig. 4b) jeweils in der Transportposition für den Landtransport. Der Doppelrahmen 12 des Wurzelgestelles 10a in Fig. 4a ist teilweise weggebrochen dargestellt, um die Befestigung des Rotorblattflansches 5a am Drehkreuz 30 zu verdeutlichen. In dem mit Buchstaben C gekennzeichneten Bereich ist erkennbar, dass das Drehkreuz 30 am Rotorblattflansch 5a verschraubt ist, so dass das Rotorblatt 5 eine Drehung des Drehkreuzes 30 mitvollzieht.

In den Fig. 5a und 5b sind das Wurzelgestell 10a aus Fig. 4a und das Spitzengestell 10b aus Fig. 4b in der Anordnung für den Seetransport dargestellt. Der Hebelarm 36 der Fig. 5a und auch das Drehkreuz 30 sind gegenüber der Stellung in Fig. 4a gegen den Urzeigersinn um etwa 20° herausgedreht. Das an dem Drehkreuz 30 angeschraubte Rotorblatt 5 wird um diesen Winkel mitgedreht. Aufgrund der beweglichen Lagerung kann das blattspitzenseitige Rotorblattauflager 64 die blattwurzelseitig induzierte Drehbewegung des Rotorblattes 5 nachvollziehen und erreicht die in Fig. 5b dargestellte geänderte Lage, die von der in Fig. 4b gezeigten Lage abweicht, indem das Rotorblattauflager 64 nunmehr eine Neigung aufweist.

Die in den Fig. 4a und 4b gezeigte Position entspricht der günstigen Lage des Rotorblattes 5 für den Landtransport. Das Rotorblatt 5 kann in dieser Lage fixiert gehalten werden, indem einerseits der Hebelarm 36 über die Verspannung der Kettenzüge 38 arretiert wird, wodurch gleichzeitig auch das Drehkreuz 30 und somit auch die Rotorblattwurzel 5a fixiert sind, andererseits durch das Einschieben der Arretierbolzen, durch die die Drehachse arretiert wird. Auch die in Fig. 4b gezeigte Rotorblattauflagerplatte 66 kann durch Verspannen von Gurten 74 in dem Doppelrahmen 42 fixiert gehalten werden. Es können auch das Rotorblatt 5 umschlingende Gurte gespannt werden, um ein Verrutschen des Rotorblattes 5 aus dem Rotorblattauflager 64 zu unterbinden. Auch bei der in den Fig. 5a und 5b gezeigten günstigen Lage des Rotorblattes 5 für den Seetransport erfolgt eine Fixierung, indem der Hebelarm 36 und das Rotorblattauflager 64 wie zu den Figuren 4a und 4b erläutert arretiert werden.

Die Drehung des Rotorblattes 5 aus der Lage in Fig. 4a und 4b in die Lage der Fig. 5a und 5b erfolgt über den Hebelarm 36. Dazu weist das freie Ende des Hebelarmes 36 zwei Befestigungselemente 78 auf, denen bodenseitig und dachseitig am Doppelrahmen 12 korrespondierende Befestigungselemente 80 zugeordnet sind. Zwischen den paarweise zusammengehörenden Befestigungselementen 78, 80 kann ein Kettenzug 38 installiert werden, so dass durch Betätigung des Kettenzuges 38 eine Drehung des Hebelarmes 36 im Uhrzeigersinn oder entgegen dem Uhrzeigersinn erfolgen kann. Die Kettenzüge 38 können auch während des Transportes unter Spannung gehalten sein und so zusätzlich eine Arretierung des Rotorblattes 5 bewirken.

Für den Transport eines Rotorblattes 5 werden ein Wurzelgestell 10a und ein Spitzengestell 10b bereitgestellt. Beide Gestelle 10a, 10b werden am Rotorblatt 5 montiert, und anschließend kann durch Angriff eines Kranes am Wurzelgestell 10a und am Spitzengestell 10b das Rotorblatt 5 auf ein Landfahrzeug gehoben werden. Dabei kann z. B. das Spitzengestell 10b auf einem Nachläufer befestigt werden, während das Wurzelgestell 10a an einer Zugmaschine befestigt wird. Das Rotorblatt 5 befindet sich dazu in einer für den Straßentransport günstigen Lage, die z. B. der in Fig. 4a gezeigten entspricht. In dieser Lage ist das Rotorblatt 5 fixiert, indem der Hebelarm 36 bzw. das Drehkreuz 30 und das Rotorblattauflager 64 arretiert werden.

Bei Erreichen des Verladeortes können das Wurzelgestell 10a und das Spitzengestell 10b vom Nachläufer bzw. von der Zugmaschine gelöst werden. Ein Kran kann erneut an diesen beiden Gestellen 10a, 10b angreifen und das Rotorblatt 5 zusammen mit der aus den beiden Gestellen 10a, 10b bestehenden Transportvorrichtung 10 auf das Wasserfahrzeug verladen, das den Seetransport übernehmen soll. Für den Seetransport wird das Rotorblatt 5 in eine andere Lage gedreht, die z. B. in Fig. 5a durch die geänderte Lage des Hebelarmes 36 und der Rotorblattauflagerplatte 66 (Fig. 5b) angedeutet sind. Das Drehen des Rotorblattes 5 kann z. B. erfolgen, während die Transportvorrichtung 10 noch auf dem Landfahrzeug befestigt ist. Das Drehen kann allerdings auch erst erfolgen, wenn das Rotorblatt 5 mit der Transportvorrichtung 10 bereits auf dem Schiff abgesetzt ist. Auch in der Zeit dazwischen kann das Verdrehen bewirkt werden, z. B. wenn das Rotorblatt 5 bereits am Kran angeschlagen ist oder bereits angehoben worden ist, oder während es zwischengelagert wird.

Das Wurzelgestell 10a und das Spitzengestell 10b weisen jeweils in den Ecken des Doppelrahmens 12, 42 stabilisierte Bereiche auf, die als Containerecken 82 ausgeführt sind. An diesen stabilisierten Bereichen kann ein Kran angreifen bzw. angeschlagen werden. Diese Containerecken 82 gewährleisten darüber hinaus, dass die Transportvorrichtung 10 stapelbar ist, und dass benachbarte Transportvorrichtungen 10 aneinander befestigt werden können.

Sobald das Wasserfahrzeug seinen Bestimmungsort erreicht hat, kann das Rotorblatt 5 mit der Transportvorrichtung 10 von dem Wasserfahrzeug erneut auf ein Landfahrzeug verladen werden. Für den Landtransport kann das Rotorblatt 5 wieder in die für den Landtransport günstige Lage zurückgedreht werden.

## Patentansprüche

1. Verfahren zum Transport eines Rotorblattes (5) einer Windenergieanlage mit einem Landfahrzeug und mit einem Wasserfahrzeug, wobei das Rotorblatt (5) mit dem Landfahrzeug auf Straßen zu oder von einem Verladeort transportiert wird, an dem es von dem Wasserfahrzeug abgeladen oder für den Weitertransport auf das Wasserfahrzeug verladen wird, wobei das Rotorblatt (5) für den Transport in eine wenigstens zweiteilige Transportvorrichtung (10) angeordnet wird, die wenigstens aus einem blattwurzelseitig angeordneten Wurzelgestell (10a) und einem blattspitzenseitig angeordneten Spitzengestell (106) besteht, wobei das Verfahren die folgenden Schritte aufweist: Anordnen des Rotorblattes (5) in einer für den Straßentransport günstigen Position in der Transportvorrichtung (10), Anordnen der Transportvorrichtung (10) auf dem Landfahrzeug, Transport des Rotorblatts (5) zum oder vom Verladeort, Verladen des in der Transportvorrichtung (10) verbleibenden Rotorblattes (5) vom Landfahrzeug auf das Wasserfahrzeug oder vom Wasserfahrzeug auf das Landfahrzeug, wobei das Rotorblatt (5) für den Seetransport in einer dafür günstigen Position in der Transportvorrichtung (10) angeordnet wird, die von der Position des Straßentransports abweicht, Transport des Rotorblattes (5) mit dem Wasserfahrzeug, **dadurch gekennzeichnet, dass** das Rotorblatt (5) in der Transportvorrichtung (10) um seine Rotorblattlängsachse drehbar angeordnet ist, wobei das Wurzelgestell (10a) und das Spitzengestell (10b) der Transportvorrichtung (10) jeweils derart ausgebildet ist, dass eine Drehung des davon gehaltenen Rotorblattes (5) um dessen Rotorblattlängsachse ermöglicht ist, und wobei die Transportvorrichtung (10) eine Dreheinrichtung aufweist, wobei nach Erreichen des Verladeortes und vor dem Weitertransport mit dem Wasserfahrzeug oder dem Landfahrzeug das Rotorblatt (5) in der Transportvorrichtung (10) durch die Dreheinrichtung von der für den Straßentransport günstigen Position in die für den Seetransport günstige Position gedreht wird, oder von der für den Seetransport günstige Position in die für den Landtransport günstige Position.

2. Verfahren nach Anspruch 1, **dadurch gekennzeichnet, dass** zum Verladen des Rotorblattes (5) auf das Wasserfahrzeug oder vom Wasserfahrzeug an der Transportvorrichtung (10) angegriffen wird.

3. Verfahren nach Anspruch 1 oder 2, **dadurch gekennzeichnet, dass** mindestens zwei in Transportvorrichtungen (10) angeordnete Rotorblätter (5) über und/oder nebeneinander auf dem Wasserfahrzeug angeordnet und die benachbart zueinander angeordneten Transportvorrichtungen (10) miteinander verbunden werden.

4. Verfahren nach einem der vorhergehenden Ansprüche, **dadurch gekennzeichnet, dass** die Dreheinrichtung handbetrieben und/oder am Wurzelgestell (10a) ausgebildet ist.

5. Verfahren nach einem der vorhergehenden Ansprüche, **dadurch gekennzeichnet, dass** die Dreheinrichtung einen Hebelarm (36) aufweist, an dem ein Hebezeug (38) angreift.

6. Verfahren nach Anspruch 5, **dadurch gekennzeichnet, dass** das Hebezeug (38) ein Kettenzug ist, der an dem freien Ende des Hebelarms (36) angreift zum Drehen des Rotorblattes (5) durch Betätigung des Kettenzuges.

7. Verfahren nach einem der vorhergehenden Ansprüche, **dadurch gekennzeichnet, dass** das Rotorblatt (5) um weniger als 45 ° gedreht wird, insbesondere um weniges als 30°, insbesondere um 10°-20°.

8. Verfahren nach einem der vorhergehenden Ansprüche, **dadurch gekennzeichnet, dass** das Rotorblatt (5) in der für den Straßentransport und/oder für den Seetransport günstigen Position arretiert wird.

9. Verfahren nach Anspruch 8, **dadurch gekennzeichnet, dass** die Arretierung des Rotorblattes (5) durch Arretierung der Dreheinrichtung erfolgt.

10. Transportvorrichtung (10) zur Aufnahme eines Rotorblattes (5) einer Windenergieanlage für den Transport auf dem Land- und/oder Seeweg, wobei die Transportvorrichtung (10) wenigstens zweiteilig aufgebaut ist und wenigstens aus einem blattwurzelseitig anzuordnenden Wurzelgestell (10a) und einem blattspitzenseitig anzuordnendem Spitzengestell (10b) besteht, wobei diese beiden Gestelle so ausgebildet sind, dass das Rotorblatt (5) darin um seine Längsachse drehbar gehalten ist, wobei die Transportvorrichtung (10) eine Dreheinrichtung aufweist zur Drehung des Rotorblattes (5) um seine Längsachse aus einer für den Straßentransport günstigen Position in eine für den Seetransport günstige Position oder umgekehrt, wobei diese beiden Positionen nicht übereinstimmen, **dadurch gekennzeichnet, dass** das Wurzelgestell (10a) und das Spitzengestell (10b) der Transportvorrichtung (10) jeweils derart ausgebildet ist, dass eine Drehung des davon gehaltenen Rotorblattes (5) um dessen Rotorblattlängsachse ermöglicht ist, und wobei das Wurzel- (10a) und das Spitzengestell (10b) jeweils einen Rahmen (12, 42) aufweist, der lösbar auf einem Landfahrzeug anordenbar ist und der jeweils Anschlagpunkte (82) für das Anschlagen eines Kranes aufweist.

11. Transportvorrichtung (10) nach Anspruch 10, **dadurch gekennzeichnet, dass** die Anschlagpunkte (82) als Containerecken ausgebildet sind.

12. Transportvorrichtung (10) nach einem der vorhergehenden Ansprüche 10 oder 11, **dadurch gekennzeichnet, dass** die Dreheinrichtung handbetrieben und/oder am Wurzelgestell (10a) ausgebildet ist.

13. Transportvorrichtung (10) nach einem der vorhergehenden Vorrichtungsansprüche, **dadurch gekennzeichnet, dass** die Dreheinrichtung einen Hebelarm (36) und ein Hebezeug (38) aufweist, wobei das Hebezeug (38) zum Drehen des Rotorblattes (5) am freien Ende des Hebelarms (36) angreift.

14. Transportvorrichtung (10) nach Anspruch 13, **dadurch gekennzeichnet, dass** das Hebezeug (38) ein Kettenzug ist zum Drehen des Rotorblattes (5) durch Betätigung des Kettenzuges.

15. Transportvorrichtung (10) nach einem der vorhergehenden Vorrichtungsansprüche, **dadurch gekennzeichnet, dass** das Spitzengestell (10b) aus einem Rahmen (42) und darin drehbar angeordneten Aufnahmemittel (60) für die Rotorblattspitze besteht.

16. Transportvorrichtung (10) nach Anspruch 15, **dadurch gekennzeichnet, dass** die Aufnahmemittel (60) eine Auflagerschale (64) zur formschlüssigen Aufnahme der Rotorblattspitze aufweisen, die über einen Breitgurt (62) an dem Rahmen (42) befestigt ist, wobei die Auflagerschale (64) beweglich auf dem Breitgurt (62) angeordnet ist.

17. Transportvorrichtung (10) nach Anspruch 16, **dadurch gekennzeichnet, dass** die Auflagerschale (64) dem Rotorblatt (5) über einen so großen Umfangsbereich des Rotorblattes (5) formschlüssig anliegt, dass das Rotorblatt (5) sowohl in der für den Straßentransport als auch in der für den Seetransport günstigen Position gegen Herausrutschen aus der Auflagerschale (64) formschlüssig gehalten ist.

18. Transportvorrichtung (10) nach Anspruch 17, **dadurch gekennzeichnet, dass** die Auflagerschale (64) das Rotorblatt (5) formschlüssig um mehr als 180° umschließt, bevorzugt um mehr als 210°, weiter bevorzugt um mehr als 240°.

19. Transportvorrichtung (10) nach Anspruch 18, **dadurch gekennzeichnet, dass** die Auflagerschale (64) aus einer ersten Auflagerplatte (66) und einer schwenkbar daran angelenkten zweiten Auflagerplatte (70) besteht.

20. Transportvorrichtung (10) nach einem der vorhergehenden Vorrichtungsansprüche, **dadurch gekennzeichnet, dass** das Wurzel- (10a) und/oder das Spitzengestell (10b) jeweils blattwurzelseitige bzw. blattspitzenseitige Arretierungsmittel zur Arretierung des Rotorblattes (5) in der für den Seetransport und/oder in der für den Straßentransport günstigen Position aufweisen.

21. Transportvorrichtung (10) nach Anspruch 20, **dadurch gekennzeichnet, dass** die blattwurzelseitigen Arretierungsmittel die Dreheinrichtung arretierende Mittel sind, und/oder die blattspitzenseitigen Arretierungsmittel die Aufnahmemittel (60) nach einem der Ansprüche 15 bis 20 fixierende Mittel sind, insbesondere Zurrketten (74).

## Claims

1. Method for transporting a rotor blade (5) of a wind turbine by a land vehicle and by a watercraft, wherein the rotor blade (5) is transported by the land vehicle on roads to or from a transfer location at which it is unloaded from the watercraft or loaded onto the watercraft for further transport, wherein the rotor blade (5) is arranged for transport in an at least two-part transporter device (10) which comprises at least one root rack (10a) arranged on the blade root side and one tip rack (10b) arranged on the blade tip side, wherein the method comprises the following steps: arranging the rotor blade (5) in the transporting device (10) in a position favourable for road transport, arranging the transporting device (10) on the land vehicle, transporting the rotor blade (5) to or from the transfer location, offloading the rotor blade (5), which remains in the transporting device (10), from the land vehicle onto the watercraft or from the watercraft onto the land vehicle, wherein, for sea transport, the rotor blade (5) is arranged in the transporting device (10) in a position favourable therefor which differs from the position for road transport, and transporting the rotor blade (5) by the watercraft, **characterized in that** the rotor blade (5) is arranged in the transporting device (10) so as to be rotatable about its rotor blade longitudinal axis, wherein the root rack (10a) and the tip rack (10b) of the transporting device (10) are each designed in such a way as to allow a rotation of the rotor blade (5) held thereby about its rotor blade longitudinal axis, and wherein the transporting device (10) has a rotary unit, wherein, after reaching the transfer location and prior to further transport by the watercraft or the land vehicle, the rotor blade (5) is rotated in the transporting device (10) by the rotary unit from the position favourable for road transport into the position favourable for sea transport, or from the position favourable for seat transport into the position favourable for land transport.

2. Method according to Claim 1, **characterized in that** the transporting device (10) is acted upon in order to load the rotor blade (5) onto the watercraft or offload it from the watercraft.

3. Method according to Claim 1 or 2, **characterized in that** at least two rotor blades (5) arranged in transporting devices (10) are arranged above and/or next to one another on the watercraft and the transporting devices (10), which are arranged adjacently to one another, are connected to one another.

4. Method according to one of the preceding claims, **characterized in that** the rotary unit is hand-operated and/or formed on the root rack (10a).

5. Method according to one of the preceding claims, **characterized in that** the rotary unit has a lever arm (36) on which a lifting device (38) acts.

6. Method according to Claim 5, **characterized in that** the lifting device (38) is a chain hoist which acts on the free end of the lever arm (36) to rotate the rotor blade (5) by actuating the chain hoist.

7. Method according to one of the preceding claims, **characterized in that** the rotor blade (5) is rotated by less than 45°, in particular by less than 30°, in particular by 10°-20°.

8. Method according to one of the preceding claims, **characterized in that** the rotor blade (5) is locked in the position favourable for road transport and/or for sea transport.

9. Method according to Claim 8, **characterized in that** the rotor blade (5) is locked by locking the rotary unit.

10. Transporting device (10) for receiving a rotor blade (5) of a wind turbine for transport by land and/or sea, wherein the transporting device (10) is of at least two-part design and at least comprises a root rack (10a) to be arranged on the blade root side and a tip rack (10b) to be arranged on the blade tip side, wherein these two racks are designed in such a way that the rotor blade (5) is held therein so as to be rotatable about its longitudinal axis, wherein the transporting device (10) has a rotary unit for rotating the rotor blade (5) about its longitudinal axis from a position favourable for road transport into a position favourable for sea transport, or vice versa, wherein these two positions do not correspond, **characterized in that** the root rack (10a) and the tip rack (10b) of the transporting device (10) are each designed in such a way as to allow a rotation of the rotor blade (5) held thereby about its rotor blade longitudinal axis, and wherein the root rack (10a) and the tip rack (10b) each have a frame (12, 42) which can be releasably arranged on a land vehicle and which has respective hitching points (82) for hitching a crane.

11. Transporting device (10) according to Claim 10, **characterized in that** the hitching points (32) take the form of container corners.

12. Transporting device (10) according to either of the preceding Claims 10 and 11, **characterized in that** the rotary unit is hand-operated and/or formed on the root rack (10a).

13. Transporting device (10) according to one of the preceding device claims, **characterized in that** the rotary unit has a lever arm (36) and a lifting device (38), wherein the lifting device (38) acts on the free end of the lever arm (36) to rotate the rotor blade (5).

14. Transporting device (10) according Claim 13, **characterized in that** the lifting device (38) is a chain hoist for rotating the rotor blade (5) by actuating the chain hoist.

15. Transporting device (10) according to one of the preceding device claims, **characterized in that** the tip rack (10b) comprises a frame (42) and receiving means (60) for the rotor blade tip that are rotatably arranged therein.

16. Transporting device (10) according to Claim 15, **characterized in that** the receiving means (60) have a bearing shell (64) intended for positively receiving the rotor blade tip and being fastened via a broad strap (62) to the frame (42), wherein the bearing shell (64) is arranged movably on the broad strap (62).

17. Transporting device (10) according to Claim 16, **characterized in that** the bearing shell (62) bears positively against the rotor blade (5) over such a circumferential region of the rotor blade (5) that the rotor blade (5) is held positively against sliding out of the bearing shell (64) both in the position favourable for road transport and in the position favourable for sea transport.

18. Transporting device (10) according to Claim 17, **characterized in that** the bearing shell (64) positively encloses the rotor blade (5) by more than 180°, preferably by more than 210°, more preferably by more than 240°.

19. Transporting device (10) according to Claim 18, **characterized in that** the bearing shell (64) comprises a first bearing plate (66) and a second bearing plate (70) pivotably articulated thereon.

20. Transporting device (10) according to one of the preceding device claims, **characterized in that** the root rack (10a) and/or the tip rack (10b) have respective blade-root-side or blade-tip-side locking means for locking the rotor blade (5) in the position favourable for sea transport and/or in the position favourable for road transport.

21. Transporting device (10) according to Claim 20, **characterized in that** the blade-root-side locking means are means which lock the rotary unit, and/or the blade-tip-side locking means are means, in particular lashing chains (74), which fix the receiving means (60) according to one of Claims 15 to 20.

## Revendications

1. Procédé pour le transport d'une pale de rotor (5) d'une éolienne avec un véhicule terrestre et avec un navire, la pale de rotor (5) étant transportée avec le véhicule terrestre sur des routes vers ou d'un lieu de chargement, auquel il est déchargé du navire ou il est chargé sur celui-ci pour continuer son transport, la pale de rotor (5) étant disposée, pour le transport, dans au moins un dispositif de transport (10) en deux parties, constituée d'au moins un châssis de base (10a) disposé du côté de la base de la pale et d'un châssis de pointe (10b) disposé du côté de la pointe de la pale, le procédé comprenant les étapes suivantes : disposition de la pale de rotor (5) dans une position adaptée au transport routier dans le dispositif de transport (10), disposition du dispositif de transport (10) sur le véhicule terrestre, transport de la pale de rotor (5) vers ou du lieu de chargement, chargement de la pale de rotor (5) restant dans le dispositif de transport (10) du véhicule terrestre vers le navire ou du navire vers le véhicule terrestre, la pale de rotor (5) étant disposée dans une position adaptée au transport maritime dans le dispositif de transport (10), qui est différente de la position du transport routier, transport de la pale de rotor (5) avec le navire, **caractérisé en ce que** la pale de rotor (5) est disposé dans le dispositif de transport (10) de manière rotative autour de son axe de pale de rotor, le châssis de base (10a) et le châssis de pointe (10b) du dispositif de transport (10) étant conçus de façon à ce qu'une rotation de la pale de rotor (5) qui y est contenue soit possible autour de son axe longitudinal de pale de rotor et le dispositif de transport (10) comprenant un dispositif de rotation, la pale de rotor (5) étant tournée, après l'arrivée au lieu de chargement ou avant la continuation du transport avec le navire ou avec le véhicule terrestre, dans le dispositif de transport (10), à l'aide du dispositif de rotation, de la position adaptée au transport routier vers la position adaptée au transport maritime ou de la position adaptée au transport maritime vers la position adaptée au transport routier.

2. Procédé selon la revendication 1, **caractérisé en ce que**, pour le chargement de la pale de rotor (5) sur le véhicule terrestre ou du navire, une intervention est effectuée sur le dispositif de transport (10).

3. Procédé selon la revendication 1 ou 2, **caractérisé en ce qu'**au moins deux pales de rotor (5), disposées dans des dispositifs de transport (10), sont disposées l'une au-dessus de l'autre et/ou l'une à côté de l'autre sur le navire et les dispositifs de transport (10) disposés à proximité l'un de l'autre sont reliés entre eux.

4. Procédé selon l'une des revendications précédentes, **caractérisé en ce que** le dispositif de rotation est manuel et/ou est prévu au niveau du châssis de base (10a).

5. Procédé selon l'une des revendications précédentes, **caractérisé en ce que** le dispositif de rotation comprenant un bras de levier (36) sur lequel s'emboîte un dispositif de levage (38).

6. Procédé selon la revendication 5, **caractérisé en ce que** le dispositif de levage (38) est un palan à chaîne qui s'emboîte au niveau de l'extrémité libre du bras de levier (36) pour la rotation de la pale de rotor (5) par l'actionnement du palan à chaîne.

7. Procédé selon l'une des revendications précédentes, **caractérisé en ce que** la pale de rotor (5) est tournée de moins de 45°, plus particulièrement de moins de 30°, plus particulièrement de 10 à 20°.

8. Procédé selon l'une des revendications précédentes, **caractérisé en ce que** la pale de rotor (5) est bloquée dans la position adaptée au transport routier et/ou au transport maritime.

9. Procédé selon la revendication 8, **caractérisé en ce que** le blocage de la pale de rotor (5) a lieu par blocage du dispositif de rotation.

10. Dispositif de transport (10) pour le logement d'une pale de rotor (5) d'une éolienne, pour le transport par voie terrestre et/ou maritime, le dispositif de transport (10) étant constitué d'au moins deux parties et étant constitué d'au moins un châssis de base (10a) disposé du côté de la base de la pale et d'un châssis de pointe (10b) disposé du côté de la pointe de la pale, les deux châssis étant conçus de façon à ce que la pale de rotor (5) y est maintenue de manière rotative autour de son axe longitudinal, le dispositif de transport (10) comprenant un dispositif de rotation pour la rotation de la pale de rotor (5) autour de son axe longitudinal d'une position adaptée au transport routier vers une position adaptée au transport maritime ou inversement, ces deux positions ne coïncidant pas, **caractérisé en ce que** le châssis de base (10a) et le châssis de pointe (10b) du dispositif de transport (10) étant conçus de façon à ce qu'une rotation de la pale de rotor (5) qui y est contenue autour de son axe longitudinal de pale de rotor soit possible et le châssis de base (10a) et le châssis de pointe (10b) comprenant chacun un cadre (12, 42) qui peut être disposé de manière amovible sur un véhicule terrestre et qui comprend des points d'élingage (82) pour l'élingage d'une grue.

11. Dispositif de transport (10) selon la revendication 10, **caractérisé en ce que** les points d'élingage (82) sont conçus comme des angles de containers.

12. Dispositif de transport (10) selon l'une des revendications précédentes 10 ou 11, **caractérisé en ce que** le dispositif de rotation est manuel et/ou est prévu au niveau du châssis de base (10a).

13. Dispositif de transport (10) selon l'une des revendications précédentes, **caractérisé en ce que** le dispositif de rotation comprend un bras de levier (36) et un dispositif de levage (38), le dispositif de levage (38) s'emboîtant au niveau de l'extrémité libre du bras de levier (36) pour la rotation de la pale de rotor (5).

14. Dispositif de transport (10) selon la revendication 13, **caractérisé en ce que** le dispositif de levage (38) est un palan à chaîne pour la rotation de la pale de rotor (5) par actionnement du palan à chaîne.

15. Dispositif de transport (10) selon l'une des revendications précédentes, **caractérisé en ce que** le châssis de pointe (10b) est constitué d'un cadre (42) et de moyens de logement (60) disposés de manière rotative à l'intérieur, pour la pointe de la pale de rotor.

16. Dispositif de transport (10) selon la revendication 15, **caractérisé en ce que** les moyens de logement (60) comprennent une coque de support (64) pour le logement par complémentarité de forme de la pointe de la pale de rotor, qui est fixée par l'intermédiaire d'une sangle large (62) au cadre (42), la coque de support (64) étant disposée de manière mobile sur la sangle large (62).

17. Dispositif de transport (10) selon la revendication 16, **caractérisé en ce que** la coque de support (64) s'appuie avec complémentarité de forme contre la pale de rotor (5) par l'intermédiaire d'une zone circonférentielle d'une taille telle que la pale de rotor (5) est maintenue, avec une complémentarité de forme, aussi bien dans la position adaptée au transport routier que dans la position adaptée au transport maritime, contre un glissement hors de la coque de support (64).

18. Dispositif de transport (10) selon la revendication 17, **caractérisé en ce que** la coque de support (64) entoure la pale de rotor (5) avec une complémentarité de forme sur plus de 180°, de préférence sur plus de 210°, de préférence sur plus de 240°.

19. Dispositif de transport (10) selon la revendication 18, **caractérisé en ce que** la coque de support (64) est constituée d'une première plaque de support (66) et d'une deuxième plaque de support (70) articulée de manière pivotante par rapport à celle-ci.

20. Dispositif de transport (10) selon l'une des revendications précédentes, **caractérisé en ce que** le châssis de base (10a) et/ou le châssis de pointe (10b) comprennent chacun des moyens de blocage du côté de la base de la pale ou du côté de la pointe de la pale, pour le blocage de la pale de rotor (5) dans la position adaptée au transport maritime et/ou au transport routier.

21. Dispositif de transport (10) selon la revendication 20, **caractérisé en ce que** les moyens de blocage du côté de la base de la pale sont des moyens bloquant le dispositif de rotation et/ou les moyens de blocage du côté de la pointe de la pale sont des moyens fixant les moyens de logement (60) selon l'une des revendications 15 à 20, plus particulièrement des chaînes d'arrimage (74).
